# FASCICULE DE BREVET EUROPEEN

(11) **EP 4 075 611 B1**
(45) Date de publication et mention de la délivrance du brevet: **08.10.2025**
(21) Numéro de dépôt: 21168423.8
(22) Date de dépôt: 14.04.2021
(51) Int. Cl.: H01R 13/453, H01R 13/703, H01R 13/717, H02G 3/08

(54) **DISPOSITIF DE PROTECTION D'UN CONNECTEUR ÉLECTRIQUE, ENSEMBLE COMPRENANT UN ENJOLIVEUR ET LEDIT DISPOSITIF DE PROTECTION ET APPAREIL ÉLECTRIQUE COMPRENANT LEDIT DISPOSITIF DE PROTECTION**
SCHUTZVORRICHTUNG FÜR EINEN ELEKTRISCHEN VERBINDUNGSSTECKER, BAUGRUPPE MIT EINER ZIERABDECKUNG UND DIESER SCHUTZVORRICHTUNG UND ELEKTRISCHES GERÄT, DAS DIESE SCHUTZVORRICHTUNG UMFASST
DEVICE FOR PROTECTING AN ELECTRICAL CONNECTOR, ASSEMBLY COMPRISING A TRIM AND SAID PROTECTION DEVICE AND ELECTRICAL APPLIANCE COMPRISING SAID PROTECTION DEVICE

(43) Date de publication de la demande: 19.10.2022
(73) Titulaire: Berker GmbH & Co. KG, 58579 Schalksmühle (DE)
(72) Inventeur: POINSIGNON, Jean-Marc, 67880 Krautergersheim (FR); MEYER, Loïc, 67114 Eschau (FR); GASCHY, Bryony, 67205 Oberhausbergen (FR)
(74) Mandataire: Ipsilon

(56) Documents cités:
- GB-A- 2 318 693
- US-A- 5 241 143
- US-A1- 2010 130 071
- US-A1- 2012 170 292
- US-B1- 10 483 679

## Description

La présente invention concerne le domaine des dispositifs de protection d'un connecteur électrique, le domaine des ensembles comprenant un enjoliveur et ledit dispositif de protection et le domaine des appareils électriques comprenant ledit dispositif de protection.

Les connecteurs électriques USB (Universal Serial Bus) de type C se démocratisent de plus en plus. Dans leur version d'alimentation électrique, ils peuvent fournir jusqu'à 100W en s'adaptant, notamment en tension, à l'appareil électrique qu'ils alimentent. Ils répondent alors au besoin de la plupart des appareils électroniques, jusqu'aux ordinateurs portables ou même les télévisions. Les connecteurs électriques USB viennent donc en complément, voire en remplacement, des prises de courant 110 Volts en courant alternatif ou 230 Volts en courant alternatifs que nous connaissons bien, en permettant de s'affranchir des alimentations externes qui sont encombrantes et que l'on doit transporter partout. Par conséquent, les connecteurs électriques USB ne sont plus uniquement destinés à être des connecteurs électriques intégrés dans des appareils mobiles, mais sont aussi désormais destinés à être intégrés dans des prises faisant partie de l'infrastructure des bâtiments. Ainsi, les connecteurs électriques USB ont le potentiel de devenir un standard mondial pour l'alimentation en courant continu basse tension, mais aussi pour la distribution de données dans les bâtiments.

Les éléments d'infrastructures sont prévus pour avoir une durée de vie généralement longue par rapport à des appareils électriques mobiles qui sont hors de l'infrastructure. Or, les connecteurs électriques USB n'ont pas été conçus dans cet objectif. En effet, les connecteurs électriques USB sont particulièrement sensibles aux agressions physiques ou chimiques.

Dans le domaine des prises de courant 230 Volts en courant alternatif, il est connu de protéger des connecteurs électriques à l'aide d'un obturateur qui s'efface lorsque l'on y branche une fiche électrique. Plus particulièrement, l'obturateur barre physiquement l'accès aux connecteurs électriques lorsque l'accès à celui-ci n'est pas nécessaire. Cette protection a pour but d'éviter l'accumulation de poussières, stopper la projection de gouttelettes, favoriser le nettoyage à l'aide d'une éponge humide et prévenir l'introduction d'objets pouvant blesser, obstruer ou court-circuiter le connecteur électrique.

Le document EP1318569A1 divulgue déjà une prise de courant munie d'un obturateur. Le document GB2318693A divulgue un dispositif de protection selon le préambule de la revendication 1.

Le document US20161049621A1 divulgue déjà un connecteur électrique qui est protégé par deux volets qui sont disposés parallèlement l'un par rapport à l'autre et sont tournés vers le bas pour être ainsi ouverts ou fermés. L'inconvénient de cette solution est que le débattement des deux volets se fait vers l'intérieur de la prise, obligeant le connecteur électrique à se trouver à une certaine distance de la surface extérieure.

Le document US2014213081A1 divulgue déjà un mécanisme commandé de mise en mouvement d'un unique volet d'obturation coulissant par rapport à un connecteur électrique. Cette solution est trop volumineuse et onéreuse pour être intégrée dans une prise intégrant un connecteur électrique de type USB.

Le document CN110718808A divulgue un mécanisme avec deux volets coulissants permettant de protéger un connecteur électrique et dont l'ouverture est commandée au moyen d'aimants présents sur le câble et les volets. Cette solution suppose que la fiche électrique soit elle aussi équipée d'aimants.

La présente invention a pour but de pallier au moins l'un de ces inconvénients et vise à proposer une solution peu encombrante permettant de protéger un connecteur électrique pour assurer la sécurité de l'utilisateur et le protéger des poussières, des agressions physiques et/ou chimiques.

A cet effet, la présente invention concerne un dispositif de protection d'au moins un connecteur électrique d'un appareil électrique, de préférence une prise, de préférence un connecteur électrique USB, comprenant :
au moins un obturateur agencé pour être mobile relativement audit au moins un connecteur électrique disposé selon une deuxième direction entre au moins une première position dite d'obturation, dans laquelle ledit au moins un obturateur est agencé pour recouvrir ledit au moins un connecteur électrique, et une deuxième position dite d'insertion, dans laquelle ledit au moins obturateur est agencé pour libérer l'accès audit au moins un connecteur électrique,
au moins un organe de rappel relié mécaniquement audit obturateur, ledit au moins un organe de rappel étant configuré pour autoriser le retour automatique dudit obturateur de la deuxième position vers la première position,
ledit au moins un obturateur étant agencé pour être mobile relativement audit connecteur électrique au moins selon un premier mouvement de translation rectiligne selon une première direction et dans un premier plan entre la première position et la deuxième position,
dispositif de protection caractérisé en que :
   ledit au moins un obturateur comprend au moins une zone d'appui apte et destinée à recevoir un connecteur électrique d'au moins une fiche et étant agencée pour transmettre une force d'appui selon la deuxième direction dite d'insertion sensiblement perpendiculaire à la première direction de sorte à entraîner le passage de la première position vers la deuxième position au moins selon le premier mouvement de translation rectiligne.

La présente invention concerne également un ensemble comprenant au moins un enjoliveur pour appareil électrique comprenant au moins un connecteur électrique et un dispositif de protection dudit au moins un connecteur électrique, ledit enjoliveur comprenant au moins une paroi munie d'au moins un orifice traversant, de préférence de forme oblongue, ledit orifice traversant étant apte et destiné à être disposé en regard dudit connecteur électrique et configuré pour former un accès à au moins un connecteur électrique complémentaire d'une fiche, ledit ensemble est caractérisé en ce que ledit dispositif de protection est selon l'invention.

La présente invention concerne aussi un appareil électrique, de préférence une prise, comprenant au moins un connecteur électrique, de préférence un connecteur électrique USB et un dispositif de protection dudit au moins un connecteur électrique, caractérisé en ce que ledit dispositif de protection est selon l'invention.

L'invention sera mieux comprise, grâce à la description ci-après, qui se rapporte à plusieurs modes de réalisations préférés, donnés à titre d'exemples non limitatifs, et expliqués avec référence aux dessins schématiques annexés, dans lesquels :
[Fig. 1] la figure 1 représente une vue en perspective d'un appareil électrique selon l'invention, sous la forme d'une prise, qui est muni d'un dispositif de protection selon une première variante de réalisation de l'invention et d'un enjoliveur,
[Fig. 2] la figure 2 représente une vue en coupe d'une partie de l'appareil électrique illustré à la figure 1,
[Fig. 3] la figure 3 représente une vue agrandie d'une partie de la vue de la figure 2 montrant deux obturateurs dans une première position,
[Fig. 4] la figure 4 représente une vue agrandie d'une partie de la vue de la figure 2 montrant les deux obturateurs lors du passage de la première position vers une deuxième position,
[Fig. 5] la figure 5 représente une vue agrandie d'une partie de la vue de la figure 2 montrant les deux obturateurs dans la deuxième position,
[Fig. 6] la figure 6 représente une vue en perspective d'une partie de l'appareil électrique de la figure 1 sans l'enjoliveur,
[Fig. 7] la figure 7 représente une vue en perspective de derrière d'un ensemble selon l'invention comprenant un enjoliveur et le dispositif de protection selon la première variante de réalisation,
[Fig. 8] la figure 8 représente une vue en perspective d'un appareil électrique selon l'invention, sous la forme d'une prise, qui est muni d'un dispositif de protection selon une deuxième variante de réalisation de l'invention et d'un enjoliveur,
[Fig. 9] la figure 9 représente une vue en coupe d'une partie de l'appareil électrique illustré à la figure 8 montrant un interrupteur électrique,
[Fig. 10] la figure 10 représente une vue agrandie d'une partie de la vue de la figure 8 montrant deux obturateurs dans une première position et l'interrupteur électrique dans une position non actionnée,
[Fig. 11] la figure 11 représente une vue agrandie d'une partie de la vue de la figure 8 montrant les deux obturateurs lors du passage de la première position vers une deuxième position,
[Fig. 12] la figure 12 représente une vue agrandie d'une partie de la vue de la figure 8 montrant les deux obturateurs dans la deuxième position et l'interrupteur électrique dans une position actionnée,
[Fig. 13] la figure 13 représente une vue en perspective d'une partie de l'appareil électrique de la figure 8 sans l'enjoliveur montrant les deux obturateurs dans la première position,
[Fig. 14] la figure 14 représente une vue en perspective d'une partie de l'appareil électrique de la figure 8 sans l'enjoliveur montrant les deux obturateurs dans la deuxième position,
[Fig.15] la figure 15 représente une vue en coupe d'une partie de l'appareil électrique illustré à la figure 8 montrant un module électronique d'alimentation électrique et l'interrupteur électrique.

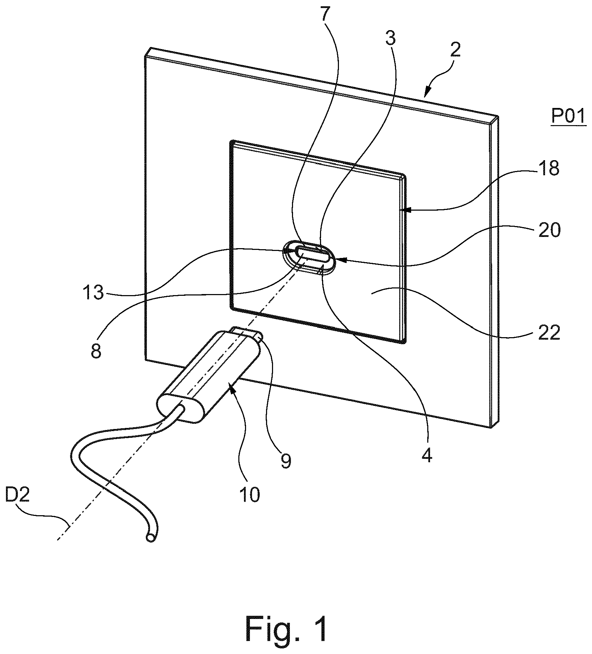

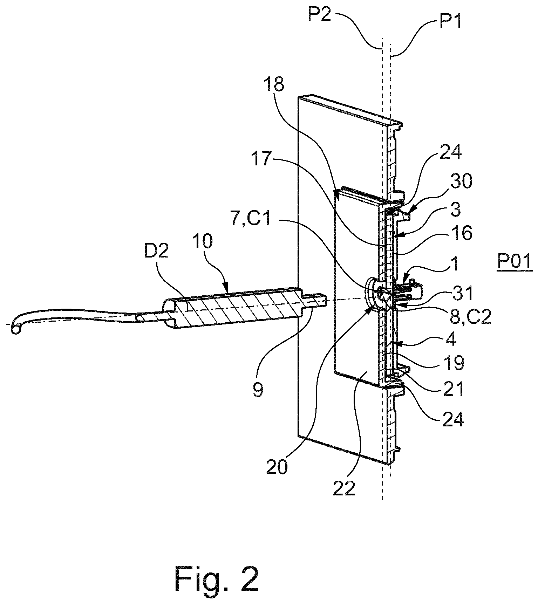

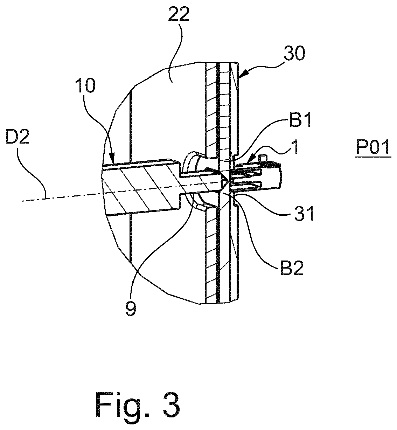

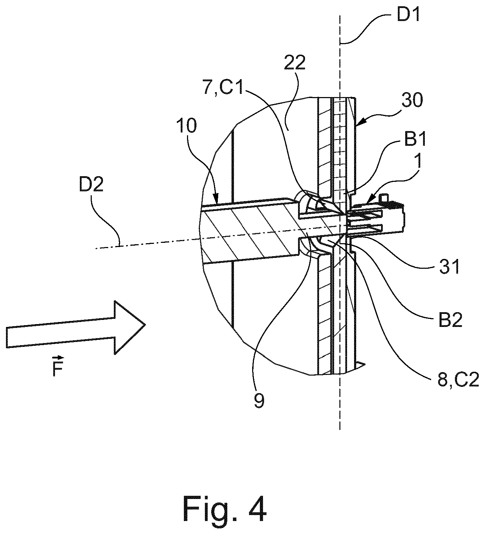

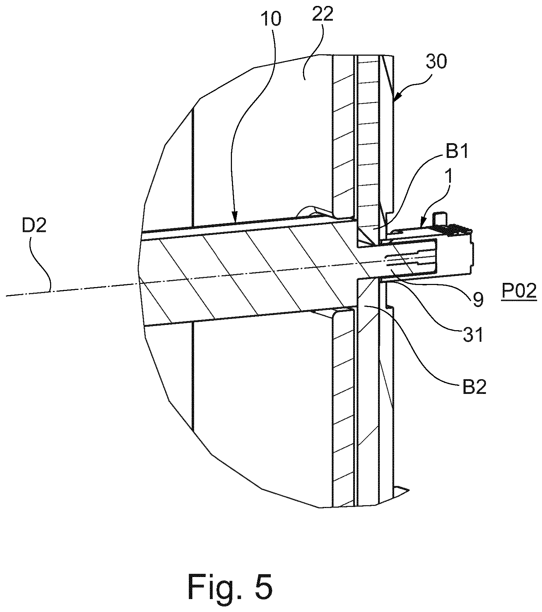

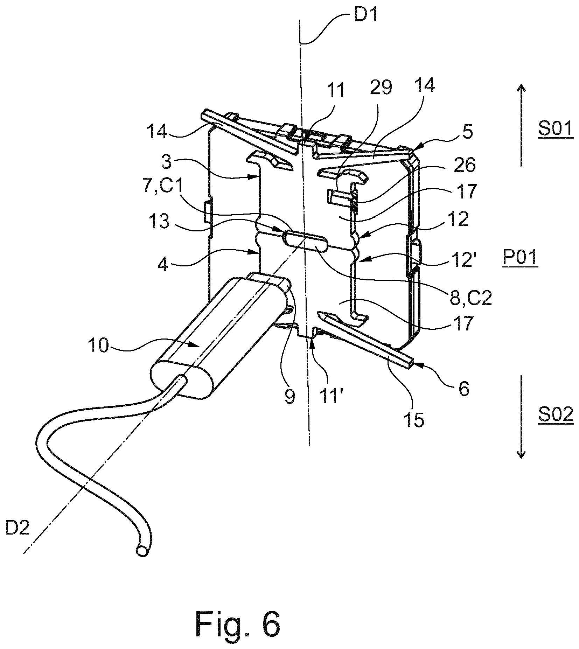

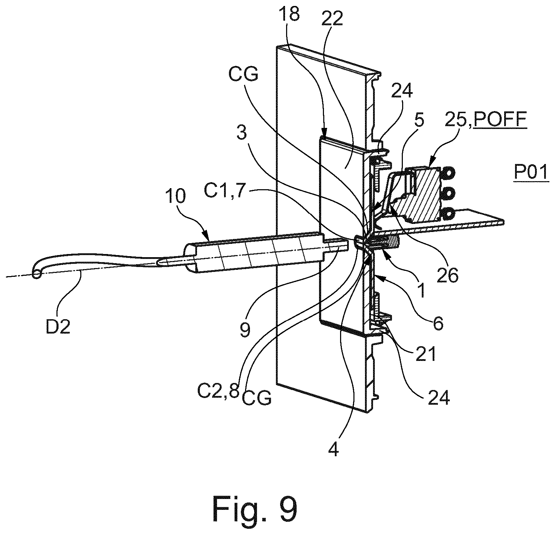

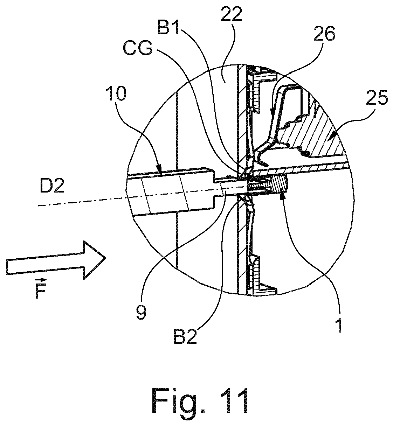

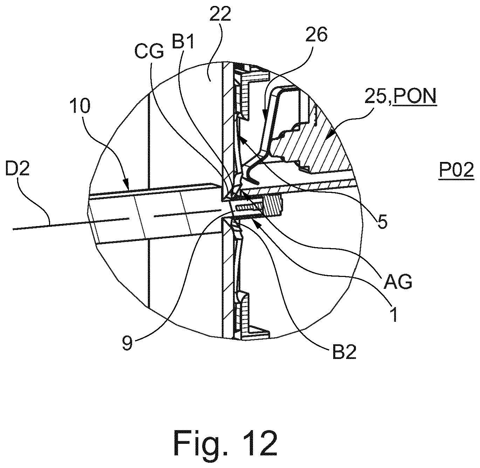

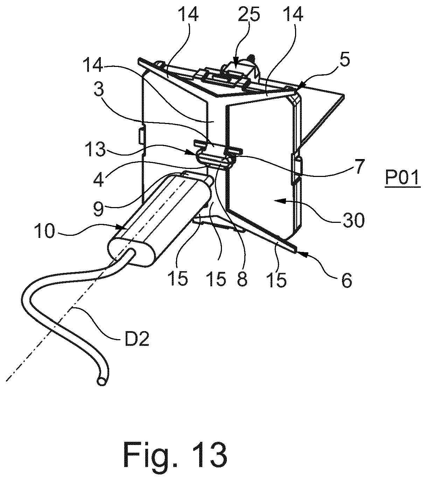

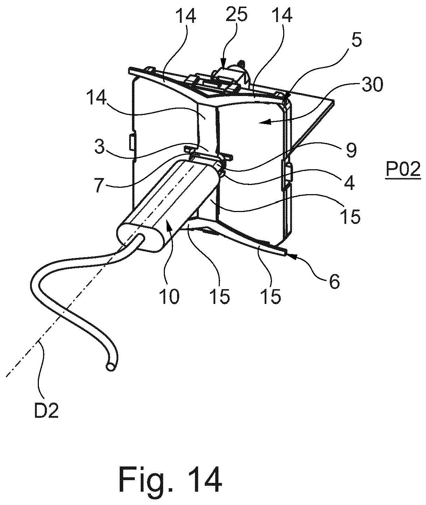

Un dispositif de protection d'au moins un connecteur électrique 1 d'un appareil électrique, de préférence une prise 2, de préférence un connecteur électrique 1 USB, comprend :
au moins un obturateur 3, 4 agencé pour être mobile relativement audit au moins un connecteur électrique 1 disposé selon une deuxième direction D2 entre au moins une première position P01 dite d'obturation (figures 1, 2, 3, 6, 8, 9, 10 et 13), dans laquelle ledit au moins un obturateur 3, 4 est agencé pour recouvrir ledit au moins un connecteur électrique 1, et une deuxième position P02 dite d'insertion (figures 5 et 12), dans laquelle ledit au moins obturateur 3, 4 est agencé pour libérer l'accès audit au moins un connecteur électrique 1,
au moins un organe de rappel 5, 6 relié mécaniquement audit obturateur 3, 4, ledit au moins un organe de rappel 5, 6 étant configuré pour autoriser le retour automatique dudit obturateur 3, 4 de la deuxième position P02 vers la première position P01 (figures 6, 7, 13 et 14),
ledit au moins un obturateur 3, 4 étant agencé pour être mobile relativement audit connecteur électrique 1 au moins selon un premier mouvement de translation rectiligne selon une première direction D1 et dans un premier plan P1 entre la première position P01 et la deuxième position P02 (figures 3 à 6 et 10 à 14),

Conformément à l'invention, le dispositif de protection est caractérisé en que :
ledit au moins un obturateur 3, 4 comprend au moins une zone d'appui 7, 8 apte et destinée à recevoir un connecteur électrique 9 d'au moins une fiche 10 et étant agencée pour transmettre une force d'appui F selon la deuxième direction D2 dite d'insertion sensiblement perpendiculaire à la première direction D1 de sorte à entraîner le passage de la première position P01 vers la deuxième position P02 au moins selon le premier mouvement de translation rectiligne.

Avantageusement, ladite au moins une zone d'appui 7, 8 permet de transmettre audit au moins un obturateur 3, 4 au moins une composante de la force d'appui F laquelle composante étant dirigée selon la première direction D1. Il en résulte que lorsque le dispositif d'obturation est intégré dans un appareil électrique muni d'un connecteur électrique 1 disposé selon la deuxième direction D2, ledit au moins un obturateur 3, 4 peut être déplacé au moins selon un premier mouvement de translation rectiligne selon la première direction D1 qui est perpendiculaire à la deuxième direction D2 entre la première position P01 et la deuxième position P02 consécutivement à l'appui exercé par le connecteur électrique 9 de la fiche 10 sur ladite au moins une zone d'appui 7, 8. Ladite au moins une zone d'appui 7, 8 permet ainsi une translation dudit au moins un obturateur 3, 4 à l'insertion du connecteur électrique 9. En effet, lors de cette l'insertion l'extrémité du connecteur électrique 9 vient appuyer sur cette zone d'appui 7, 8, ce qui provoque le déplacement dudit au moins un obturateur 3, 4 au moins selon le premier mouvement de translation, jusqu'à ce que ledit au moins un obturateur 3, 4 libère l'accès audit au moins un connecteur électrique 1 et permette l'insertion complète du connecteur électrique 9 de la fiche 10 dans le connecteur électrique 1 de l'appareil électrique.

L'encombrement de ce dispositif de protection est essentiellement dans le plan P1 et selon la direction D1. Lorsqu'il est intégré dans l'appareil électrique, le dispositif de protection occupe une place très restreinte dans l'appareil électrique dans la direction D2. Ainsi, ce dispositif de protection selon l'invention présente l'avantage d'être peu encombrant une fois intégré dans l'appareil électrique notamment dans la deuxième direction D2. Enfin le dispositif de protection selon l'invention permet d'éviter l'accumulation de poussières et/ou de stopper la projection de gouttelettes et/ou favoriser le nettoyage à l'aide d'une éponge humide et/ou prévenir l'introduction d'objets pouvant blesser, obstruer ou court-circuiter le connecteur électrique. Ceci est particulièrement valable dans les zones publiques, exposées aux actes de malveillances. Le dispositif de protection selon l'invention permet donc d'améliorer la durabilité et la robustesse de l'appareil électrique dans lequel il est destiné à être intégré. Aucune modification du connecteur électrique 9 de la fiche 10 n'est nécessaire.

Selon une première variante de réalisation de l'invention et comme l'illustrent les figures 1 à 7, ledit au moins un obturateur 3, 4 est agencé pour être mobile relativement audit connecteur électrique 1 uniquement selon le premier mouvement de translation rectiligne selon une première direction D1 et dans un premier plan P1 entre la première position P01 et la deuxième position P02 (figures 3 à 6) et ladite au moins une zone d'appui 7, 8 est agencée pour transmettre une force d'appui F selon la deuxième direction D2 dite d'insertion sensiblement perpendiculaire à la première direction D1 de sorte à entraîner le passage de la première position P01 vers la deuxième position P02 uniquement selon le premier mouvement de translation rectiligne.

Dans ce cas, la trajectoire du premier mouvement de translation rectiligne et la deuxième direction D2 forment sensiblement un angle à 90 degrés.

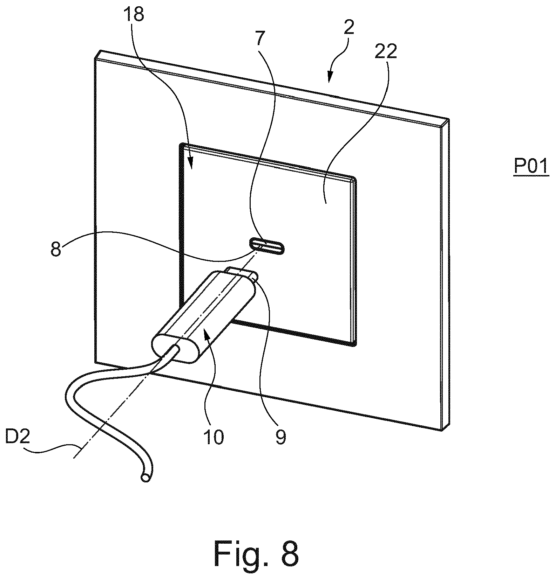

Selon une deuxième variante de réalisation de l'invention et comme l'illustrent les figures 8 à 15, ledit au moins un obturateur 3, 4 est agencé pour être mobile relativement audit connecteur électrique 1 selon le premier mouvement de translation rectiligne selon la première direction D1 et dans le premier plan P1 composé avec un deuxième mouvement de translation rectiligne selon la deuxième direction D2 entre la première position P01 et la deuxième position P02 et ladite au moins une zone d'appui 7, 8 est agencée pour transmettre la force d'appui F selon la deuxième direction D2 dite d'insertion pour entraîner le passage de la première position P01 vers la deuxième position P02 au moins selon le premier mouvement de translation rectiligne composé avec le deuxième mouvement de translation rectiligne.

Dans ce cas, la trajectoire du premier mouvement de translation rectiligne composé avec le deuxième mouvement de translation rectiligne et la deuxième direction D2 forment sensiblement un angle à 45 degrés.

Dans tous les cas, le dispositif de protection comprend de préférence au moins un premier obturateur 3 et un deuxième obturateur 4, et le premier obturateur 3 et le deuxième obturateur 4 sont agencés pour, dans leur première position respective P01, recouvrir totalement le connecteur électrique 1 et le premier obturateur 3 et le deuxième obturateur 4 sont agencés pour, dans leur deuxième position P02 respective, découvrir totalement le connecteur électrique 1.

De préférence dans la première variante de réalisation, ledit premier obturateur 3 et ledit deuxième obturateur 4 comprennent chacun au moins une pièce plane d'épaisseur E comprenant une première face 16 apte et destinée à être du côté du connecteur électrique 1 et une deuxième face 17 parallèle à la première face 16. Chaque pièce plane est disposée dans le plan P1.

De préférence dans la deuxième variante de réalisation, ledit premier obturateur 3 et ledit deuxième obturateur 4 comprennent chacun au moins une pièce plane d'épaisseur E comprenant une première face 16 apte et destinée à être du côté du connecteur électrique 1 et une deuxième face 17 parallèle à la première face 16. Chaque pièce plane est disposée dans un plan incliné par rapport au plan P1, de préférence à 45 degrés.

De préférence, le premier obturateur 3 comprend une première extrémité 11 reliée à un premier organe de rappel 5 et une deuxième extrémité 12 comprenant une première portion d'obturation laquelle comprenant une première zone d'appui 7 et le deuxième obturateur 4 comprend une première extrémité 11' reliée à un deuxième organe de rappel 6 et une deuxième extrémité 12' comprenant une deuxième portion d'obturation laquelle comprenant une deuxième zone d'appui 8.

De préférence, la première portion d'obturation du premier obturateur 3 et la deuxième portion d'obturation du deuxième obturateur 4 sont aptes et destinées à être en contact l'une de l'autre dans leur première position P01 respective de sorte à recouvrir totalement le connecteur électrique 1 et la première portion d'obturation du premier obturateur 3 et la deuxième portion d'obturation du deuxième obturateur 4 sont aptes et destinées à être à distances l'une de l'autre dans leur deuxième position P02 respective de sorte à découvrir totalement le connecteur électrique 1.

De préférence, la première zone d'appui 7 et la deuxième zone d'appui 8 sont aptes et destinées à délimiter une zone d'insertion 13 dans la première position P01, de forme complémentaire audit connecteur électrique 9 de ladite fiche 10 et de préférence de forme oblongue.

Avantageusement la zone d'insertion 13 est réalisée de façon à permettre à l'usager de reconnaitre visuellement la forme caractéristique du connecteur électrique 1 de préférence de type USB-C qui se trouve derrière. De préférence, la zone d'insertion 13 présente une couleur sombre, par exemple grise ou noire ou au moins présente un contraste par rapport au coloris de l'appareil électrique. La forme et la couleur de la zone d'insertion 13 sont utilisés pour faciliter la reconnaissance visuelle.

De préférence, la première extrémité 11 du premier obturateur 3 comprend le premier organe de rappel 5 de sorte à former une première pièce monobloc et la première extrémité 11' du deuxième obturateur 4 comprend le deuxième organe de rappel 6 de sorte à former une deuxième pièce monobloc.

Avantageusement, cette configuration monobloc présente un intérêt pour faciliter l'industrialisation.

De préférence, la première extrémité 11 du premier obturateur 3 comprend au moins une portion en matière déformable 14 formant ledit premier organe de rappel et la première extrémité 11' du deuxième obturateur 4 comprend au moins une portion en matière déformable 15 formant ledit deuxième organe de rappel 6.

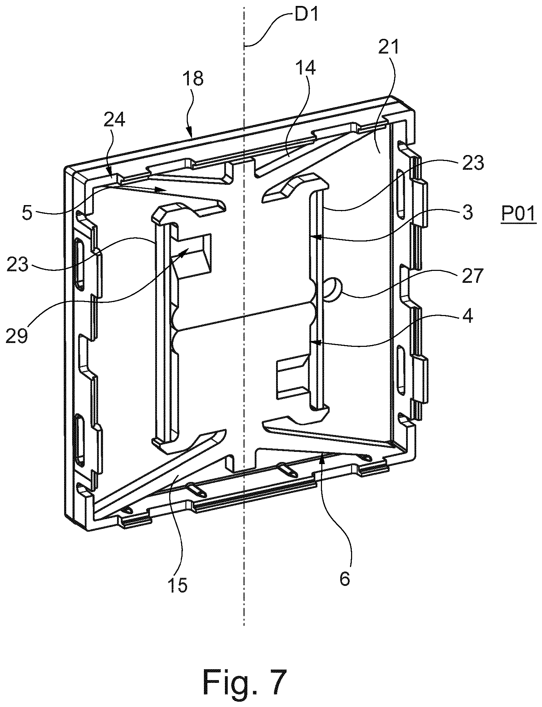

La portion en matière déformable 14, 15 peut comprendre au moins deux branches, lesquelles branches sont agencées pour être montées sur une paroi périphérique 24 saillante de l'enjoliveur 18 décrit ci-après (figure 7). De préférence les branches partent d'un tronc commun et la portion en matière déformable 14, 15 présente une forme de T.

De préférence, la première zone d'appui 7 du premier obturateur 3 comprend un premier plan incliné C1 et la deuxième zone d'appui 8 du deuxième obturateur 4 comprend un deuxième plan incliné C2.

De préférence, la deuxième extrémité 12 du premier obturateur 3 comprend un premier bord B1 comportant le premier plan incliné C1 et la deuxième extrémité 12' du deuxième obturateur 4 comprend un deuxième bord B2 comportant le deuxième plan incliné C2.

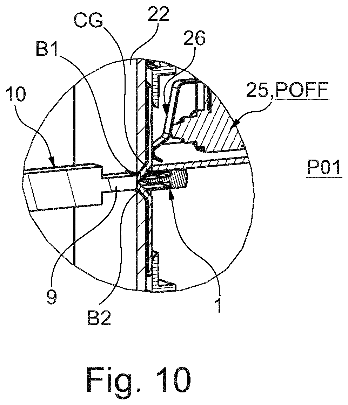

Préférentiellement le premier bord B1 et le deuxième bord B2 sont aptes et destinés à être en contact l'un de l'autre dans la première position P01 (figures 3 et 10) et sont aptes et destinés à être à distance l'un de l'autre dans la deuxième position P02 (figures 5 et 12).

Dans la première variante de réalisation, de préférence, le premier plan incliné C1 et le deuxième plan incliné C2 forment respectivement avec la deuxième direction D2 un angle de préférence égal à 45 degrés.

Dans la deuxième variante de réalisation, le premier plan incliné C1 et le deuxième plan incliné C2 forment respectivement avec la deuxième direction D2 un angle de préférence égal à 90 degrés.

L'invention concerne un ensemble comprenant au moins un enjoliveur 18 (figures 1, 2, 7, 8 et 9) pour appareil électrique comprenant au moins un connecteur électrique 1 et un dispositif de protection dudit au moins un connecteur électrique 1, ledit enjoliveur 18 comprenant au moins une paroi 19 munie d'au moins un orifice traversant 20, de préférence de forme oblongue, ledit orifice traversant 20 étant apte et destiné à être disposé en regard dudit connecteur électrique 1 et configuré pour former un accès à au moins un connecteur électrique 9 complémentaire d'une fiche 10. Conformément à l'invention, ledit ensemble est caractérisé en ce que ledit dispositif de protection est selon l'invention et tel que décrit précédemment.

Avantageusement, cet ensemble comprenant l'enjoliveur 18 et le dispositif de protection peut être proposé comme un ensemble venant en remplacement d'un enjoliveur standard qui ne serait pas pourvu d'un dispositif de protection selon l'invention. Par exemple, pour une prise standard comprenant au moins un connecteur électrique de préférence USB et muni d'un enjoliveur démontable de la prise standard, il serait possible de démonter l'enjoliveur standard et de le remplacer avec l'ensemble selon l'invention qui comprend l'enjoliveur 18 et le dispositif de protection selon l'invention. L'usager qui souhaite améliorer son installation électrique en installant des prises protégées par le dispositif de protection selon l'invention nécessite uniquement de remplacer l'enjoliveur standard de la prise standard par l'ensemble selon l'invention.

De préférence, la paroi 19 de l'enjoliveur 18 est disposée dans un deuxième plan P2 parallèle audit premier plan P1 et la paroi 19 comprend une face interne 21 et une face externe 22, et ledit au moins un obturateur 3, 4 est monté coulissant par rapport à ladite face interne 21 dudit enjoliveur 18.

Dans la première variante de réalisation de l'ensemble, de préférence et comme l'illustrent les figures 1, 2 et 3, le dispositif de protection comprend un premier obturateur 3 et un deuxième obturateur 4 tel que décrit précédemment, et ledit orifice traversant 20 débouche sur la première portion d'obturation du premier obturateur 3 et la deuxième portion d'obturation du deuxième obturateur 4 dans la première position P01.

Avantageusement, la première portion d'obturation du premier obturateur 3 et la deuxième portion d'obturation du deuxième obturateur 4 permet de bloquer l'accès au connecteur électrique 1 dans la première position P01.

Dans ce cas et comme l'illustre la figure 1, dans la première position P01, l'orifice traversant 20 débouche préférentiellement sur la zone d'insertion 13 décrite ci-dessus.

Avantageusement, la zone d'insertion 13 est visible par l'usager au travers de l'orifice traversant 20.

Dans la première variante de réalisation de l'ensemble selon l'invention illustrée aux figures 1 à 7, l'orifice traversant 20 peut se présenter sous la forme d'un canal.

Dans la première variante de réalisation de l'ensemble, de préférence et comme l'illustre la figure 7, la face interne 21 de l'enjoliveur 18 comprend en outre au moins deux rails de guidage 23 coopérant avec ledit au moins un obturateur 3, 4 et agencés pour guider ledit au moins obturateur 3, 4 selon le premier mouvement de translation.

De préférence et comme l'illustre la figure 7, les deux rails de guidages 23 sont parallèles entre eux, s'étendent longitudinalement selon la première direction D1 et sont saillants et perpendiculaires par rapport à la face interne 21 de l'enjoliveur 18.

Dans la première variante de réalisation de l'ensemble, de préférence et comme l'illustre la figure 7, l'enjoliveur 18 comprend en outre une paroi périphérique 24 saillante et perpendiculaire par rapport à la face interne 21 sur laquelle est monté ledit au moins un organe de rappel 5, 6.

Dans la deuxième variante de réalisation de l'ensemble, de préférence, de manière alternative et comme l'illustrent les figures 8, 9 et 10, le dispositif de protection comprend un premier obturateur 3 et un deuxième obturateur 4 tel que décrit précédemment, et la première portion d'obturation du premier obturateur 3 et la deuxième portion d'obturation du deuxième obturateur 4 s'insère au moins en partie dans ledit orifice traversant 20 de l'enjoliveur 18 dans la première position P01.

Avantageusement, la première portion d'obturation du premier obturateur 3 et la deuxième portion d'obturation du deuxième obturateur 4 permettent de bloquer l'accès au connecteur électrique 1 dans la première position P01 et d'affleurer la face externe 22 de l'enjoliveur 18. Cette configuration facilite le nettoyage.

Dans ce cas et comme l'illustre la figure 8, dans la première position P01, l'orifice traversant 20 contient la zone d'insertion 13.

Dans la deuxième variante de réalisation de l'ensemble selon l'invention illustrée aux figures 8 à 15, l'orifice traversant 20 peut comprendre au moins une face de guidage CG coopérant avec ledit au moins un obturateur 3, 4 et ladite face de guidage CG étant agencée pour guider ledit au moins un obturateur 3, 4 selon le premier mouvement de translation composé avec le deuxième mouvement de translation.

Selon une possibilité de la deuxième variante de réalisation et comme l'illustre la figure 12, le connecteur électrique 1 comprend une arête de guidage AG ou une surface de guidage (non représentée) qui est agencée pour guider ledit au moins un obturateur 3, 4 selon le premier mouvement de translation composé avec le deuxième mouvement de translation.

Par exemple, de la première position P01 vers la deuxième position P02 ou inversement, ladite face de guidage CG permet de guider ledit au moins un obturateur 3, 4 selon le premier mouvement de translation composé avec le deuxième mouvement de translation et de la deuxième position P02 vers la première position P01 ou inversement, ladite arête de guidage AG permet de guider ledit au moins un obturateur 3, 4 selon le premier mouvement de translation composé avec le deuxième mouvement de translation.

Ledit au moins un obturateur 3, 4 peut ainsi glisser sur ladite face de guidage CG de l'orifice traversant 20 ou ladite arête de guidage AG ou ladite surface de guidage du connecteur électrique 1.

De préférence, ladite face de guidage CG forme respectivement avec la deuxième direction D2 un angle de préférence égal à 45 degrés.

L'invention concerne également un appareil électrique, de préférence une prise 2, comprenant au moins un connecteur électrique 1, de préférence un connecteur électrique 1 USB et un dispositif de protection dudit au moins un connecteur électrique 1. Conformément à l'invention ledit dispositif de protection est selon l'invention et est tel que décrit précédemment.

Dans cette configuration avantageuse, ledit au moins un obturateur 3, 4 est mobile relativement audit au moins un connecteur électrique 1, disposé selon une deuxième direction D2, entre au moins une première position P01 dite d'obturation (figures 1, 2, 3, 6, 8, 9, 10 et 13) et une deuxième position P02 dite d'insertion (figures 5 et 12). Dans cette première position P01, ledit au moins un obturateur 3, 4 recouvre ledit au moins un connecteur électrique 1. Dans cette deuxième position P02, ledit au moins obturateur 3, 4 découvre le connecteur électrique 1 et libère l'accès audit au moins un connecteur électrique 1. Ledit au moins un obturateur 3, 4 est mobile relativement audit connecteur électrique 1 au selon un premier mouvement de translation rectiligne selon une première direction D1 et dans un premier plan P1 entre la première position P01 et la deuxième position P02 (figures 3 à 6 et 10 à 14).

Plus particulièrement dans la première variante de réalisation illustrée aux figures 1 à 7, ledit au moins un obturateur 3, 4 est mobile relativement audit connecteur électrique 1 uniquement selon le premier mouvement de translation rectiligne selon une première direction D1 et dans un premier plan P1 entre la première position P01 et la deuxième position P02.

Alternativement, dans la deuxième variante de réalisation illustrée aux figures 8 à 15, ledit au moins un obturateur 3, 4 est mobile relativement audit connecteur électrique 1 selon le premier mouvement de translation rectiligne selon la première direction D1 et dans le premier plan P1 composé avec un deuxième mouvement de translation rectiligne selon la deuxième direction D2 entre la première position P01 et la deuxième position P02.

L'encombrement de ce dispositif de protection est essentiellement dans le plan P1 et dans la direction D1. Le dispositif de protection occupe une place très restreinte dans l'appareil électrique dans la direction D2. Ainsi, ce dispositif de protection selon l'invention présente l'avantage d'être peu encombrant dans l'appareil électrique notamment dans la deuxième direction D2. Cette configuration avantageuse permet notamment de libérer de l'espace dans l'appareil électrique pour intégrer des fonctionnalités additionnelles qui seront décrites ci-après et cela notamment dans un boîtier technique dont la taille et le volume est standard. Le boîtier technique peut correspondre à une boite d'encastrement, qui est standard dans le domaine du bâtiment.

Lorsque le dispositif de protection comprend le premier obturateur 3 et le deuxième obturateur 4, alors ces derniers sont mobiles relativement audit connecteur électrique 1 de la prise 2 au moins selon la première direction D1 et dans des sens opposés, respectivement un premier sens S01 et un deuxième sens S02 lors du déplacement de la première position P01 vers la deuxième position P02.

De plus, ces derniers sont mobiles relativement audit connecteur électrique 1 de la prise 2 au moins selon la première direction D1 et dans des sens opposés, respectivement un troisième sens et un quatrième sens lors du déplacement de la deuxième position P02 vers la première position P01, le troisième sens est opposé au premier sens S01 et le quatrième sens est opposé au deuxième sens S02.

De préférence, l'appareil électrique comprend un enjoliveur 18 formant avec ledit dispositif de protection un ensemble selon l'invention et tel que décrit précédemment.

Avantageusement, cette configuration est particulièrement avantageuse lorsque l'appareil électrique est une prise 2 comme représentée sur les figures. Dans ce cas, il est possible de proposer à l'usager un produit complet sous la forme d'une prise 2 comprenant à la fois un enjoliveur 18 et un dispositif de protection.

De préférence, l'appareil électrique comprend en outre au moins un interrupteur 25 comprenant au moins un levier d'actionnement 26 et ledit levier d'actionnement 2 est disposé relativement audit au moins un obturateur 3, 4 de sorte que dans la première position P01 dudit au moins un obturateur 3, 4, le levier d'actionnement 26 est dans une position non actionnée POFF et dans la deuxième position P02 dudit obturateur 3, 4 le levier d'actionnement 26 est dans une position actionnée PON ou inversement.

Avantageusement, en plus d'assurer une fonction de protection, le dispositif de protection selon l'invention et plus particulièrement ledit au moins un obturateur 3, 4, permet d'actionner le levier d'actionnement 26 de l'interrupteur 25 lorsque ledit au moins un obturateur 3, 4 se trouve dans la deuxième position P02 et à l'issu du déplacement dudit au moins un obturateur de la première position P01 vers la deuxième position P02. Ledit au moins un obturateur 3, 4, permet en outre de ne pas actionner le levier d'actionnement 26 de l'interrupteur 25 lorsque ledit au moins un obturateur 3, 4 se trouve dans la première position P01 et à l'issu du déplacement dudit au moins un obturateur 3, 4 de la deuxième position P02 vers la première position P01.

De préférence, ledit interrupteur 25 est normalement ouvert dans la position non actionnée POFF.

Dans ce cas, et comme l'illustrent les figures 6, 7, le premier obturateur 3 ou le deuxième obturateur 4 peut comprendre un passage 29 ou un amincissement de matière configuré pour dans la première position P01 laisser passer le levier d'actionnement 26 qui est alors dans la position non actionnée POFF. Dans la position actionnée PON, la première face 16 du premier obturateur 3 ou du deuxième obturateur 4 vient en appui sur le levier d'actionnement 26.

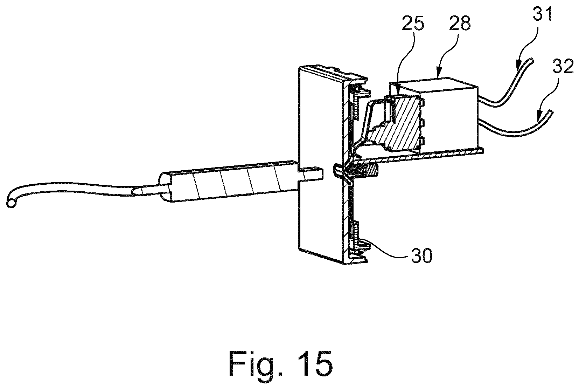

De préférence et comme le montre la figure 15, ledit appareil électrique comprend un module électronique d'alimentation 28 dudit connecteur électrique 1 relié électriquement au dit connecteur électrique 1 et ledit interrupteur 25 est relié électriquement audit module électronique d'alimentation 28 pour interrompre ou autoriser le passage du courant dans le module électronique d'alimentation 18.

Le module électronique d'alimentation 28 comprend un ensemble de composants électroniques. Le module électronique d'alimentation 28 est prévu pour alimenter le connecteur électrique 1 à partir du réseau électrique de l'infrastructure. Par exemple, le module électronique 28 est alimenté par deux conducteurs électriques 32, 33 au réseau électrique de l'infrastructure.

Dans cette configuration avantageuse, le module électronique d'alimentation 28 est allumé ou éteint consécutivement au déplacement de l'obturateur 3, 4. L'usager n'a pas besoin d'actionner un bouton supplémentaire pour allumer ou éteindre le module électronique d'alimentation 28. Il en résulte que pour l'usager, c'est l'insertion du connecteur électrique 9 de la fiche 10 dans le connecteur électrique 1 de l'appareil électrique qui provoque la mise en marche du module électronique d'alimentation 28 et c'est le retrait du connecteur électrique 9 de la fiche 10 dans le connecteur électrique 1 de l'appareil électrique qui provoque l'arrêt du module électronique d'alimentation 28. Avantageusement, cet agencement permet aussi de réaliser un test diélectrique. En effet, il permet d'isoler galvaniquement l'appareil électrique pour répondre aux exigences des normes de test diélectrique 500 Volts DC et plus qui sont appliquées dans les pays Anglo-saxons. Aujourd'hui cette norme oblige à déconnecter manuellement les appareils électriques avec de l'électronique du réseau électrique pour réaliser le test. Des composants électroniques seraient couteux et volumineux pour traiter à l'équivalence cette fonction. Avantageusement, lorsque l'appareil électrique est installé proche de personnes, cette configuration permet de garantir la déconnexion complète de l'appareil électrique du réseau et donc d'assurer que le l'appareil électrique ne rayonne pas, par exemple s'il est installé dans une chambre à coucher. Un autre avantage de cette configuration est la protection contre les surtensions. En effet, le fait d'avoir les composants électroniques déconnectés du réseau permet de les protéger par rapport à la foudre ou à d'autres sources de surtension. Un autre avantage de cette configuration est l'impact sur la durée de vie de l'appareil électrique. En effet, les composants électroniques du module électronique d'alimentation 28 ont une durée de vie liée à leur profil d'utilisation et d'alimentation. Le fait de mettre hors tension peut devenir très favorable pour la durée de vie de l'appareil électrique car les composants électroniques critiques seront moins sollicités. Un autre avantage est qu'en veille, c'est à dire quand rien est connecté au connecteur électrique 1, il n'y a pas de consommation d'électricité.

De préférence, ledit appareil électrique comprend un module fonctionnel additionnel et ledit interrupteur 25 est relié électriquement audit module fonctionnel additionnel pour interrompre ou autoriser le passage du courant dans le module fonctionnel additionnel.

Dans cette configuration avantageuse, le module fonctionnel additionnel est allumé ou éteint consécutivement au déplacement dudit au moins un obturateur 3, 4 par l'intermédiaire de l'interrupteur 25. L'usager n'a pas besoin d'actionner un bouton supplémentaire pour allumer ou éteindre le module fonctionnel additionnel. Il en résulte que pour l'usager, c'est l'insertion ou le retrait du connecteur électrique 9 de la fiche 10 dans le connecteur électrique 1 de l'appareil électrique qui provoque la mise en marche ou l'arrêt du module fonctionnel additionnel.

Préférentiellement, le module fonctionnel additionnel peut comprendre au moins un indicateur, de préférence lumineux ou sonore. Cet indicateur lumineux peut être une LED. L'indicateur peut tout simplement être une zone colorée dans un coloris différent de celui de l'enjoliveur 18.

De préférence, ledit enjoliveur 18 comprend au moins un premier orifice 27 ou une zone avec un amincissement de matière, ledit obturateur 3, 4 comprend au moins un deuxième orifice ou est dans une matière translucide, le premier orifice 27 ou la zone avec un amincissement de matière, le deuxième orifice et ledit indicateur étant alignés dans la première position P01 ou dans la deuxième position P02.

Avantageusement, l'indicateur peut signaler à l'usager que le connecteur 9 de la fiche 10 est inséré dans le connecteur électrique 1.

De préférence et comme l'illustrent les figures, ledit appareil électrique est une prise 2 de type murale agencée pour être encastrée ou rapportée en saillie dans une paroi. De manière alternative, ledit appareil électrique est une prise intégrée à une goulotte ou à du mobilier de bureau.

De préférence, ledit connecteur électrique 1 est de type USB (Universal Serial Bus) de préférence de type C comme l'illustrent les figures.

Lorsque l'appareil électrique est une prise 2 comprenant un connecteur électrique 1 de préférence de type USB de préférence de type C comme l'illustrent les figures, le connecteur électrique 1, et le cas échéant l'interrupteur 25, et le cas échéant le module électronique d'alimentation 28, et le cas échéant le module fonctionnel additionnel sont disposés à l'intérieur d'un boîtier technique comprenant une paroi de montage 30 sur laquelle vient se fixer de façon démontable l'enjoliveur 18. La paroi de montage 30 du boîtier technique comprend un orifice 31 débouchant sur le connecteur électrique 1.

L'enjoliveur 18 et la paroi de montage 30 sont distant l'un de l'autre et forme un espace qui reçoit de préférence le dispositif de protection selon l'invention.

Ledit dispositif de protection peut être assemblé avec la face interne 21 de l'enjoliveur 18 de façon solidaire ou non.

De manière alternative, ledit dispositif de protection peut être assemblé avec la paroi de montage 30 de façon solidaire ou non.

Bien entendu, l'invention n'est pas limitée aux modes de réalisation décrits et représentés aux dessins annexés. Des modifications restent possibles, sans sortir pour autant du domaine de protection de l'invention.

## Revendications

1. Dispositif de protection d'au moins un connecteur électrique (1) d'un appareil électrique de préférence une prise (2), de préférence un connecteur électrique (1) USB, comprenant :
- au moins un obturateur (3, 4) agencé pour être mobile relativement audit au moins un connecteur électrique (1) disposé selon une deuxième direction (D2) entre au moins une première position (P01) dite d'obturation, dans laquelle ledit au moins un obturateur (3, 4) est agencé pour recouvrir ledit au moins un connecteur électrique (1), et une deuxième position (P02) dite d'insertion, dans laquelle ledit au moins obturateur (3, 4) est agencé pour libérer l'accès audit au moins un connecteur électrique (1),
- au moins un organe de rappel (5, 6) relié mécaniquement audit obturateur (3, 4), ledit au moins un organe de rappel (5, 6) étant configuré pour autoriser le retour automatique dudit obturateur (3, 4) de la deuxième position (P02) vers la première position (P01),
- ledit au moins un obturateur (3, 4) étant agencé pour être mobile relativement audit connecteur électrique (1) au moins selon un premier mouvement de translation rectiligne selon une première direction (D1) et dans un premier plan (P1) entre la première position (P01) et la deuxième position (P02),
dispositif de protection caractérisé en que :
- ledit au moins un obturateur (3, 4) comprend au moins une zone d'appui (7, 8) apte et destinée à recevoir un connecteur électrique (9) d'au moins une fiche (10) et étant agencée pour transmettre une force d'appui (F) selon la deuxième direction (D2) dite d'insertion sensiblement perpendiculaire à la première direction (D1) de sorte à entraîner le passage de la première position (P01) vers la deuxième position (P02) au moins selon le premier mouvement de translation rectiligne.

2. Dispositif de protection selon la revendication 1, **caractérisé en ce que** ledit au moins un obturateur (3, 4) est agencé pour être mobile relativement audit connecteur électrique (1) selon le premier mouvement de translation rectiligne selon la première direction (D1) et dans le premier plan (P1) composé avec un deuxième mouvement de translation rectiligne selon la deuxième direction (D2) entre la première position (P01) et la deuxième position (P02) et **en ce que** la zone d'appui (7, 8) est agencée pour transmettre la force d'appui (F) selon la deuxième direction (D2) dite d'insertion pour entraîner le passage de la première position (P01) vers la deuxième position (P02) au moins selon le premier mouvement de translation rectiligne composé avec le deuxième mouvement de translation rectiligne.

3. Dispositif de protection selon l'une quelconque des revendications 1 à 2, **caractérisé en ce qu'**il comprend au moins un premier obturateur (3) et un deuxième obturateur (4), et **en ce que** le premier obturateur (3) et le deuxième obturateur (4) sont agencés pour, dans leur première position respective (P01), recouvrir totalement le connecteur électrique (1) et **en ce que** le premier obturateur (3) et le deuxième obturateur (4) sont agencés pour, dans leur deuxième position (P02) respective, découvrir totalement le connecteur électrique (1).

4. Dispositif de protection selon la revendication 3, **caractérisé en ce que** le premier obturateur (3) comprend une première extrémité (11) reliée à un premier organe de rappel (5) et une deuxième extrémité (12) comprenant une première portion d'obturation laquelle comprenant une première zone d'appui (7) et **en ce que** le deuxième obturateur (4) comprend une première extrémité (11') reliée à un deuxième organe de rappel (6) et une deuxième extrémité (12') comprenant une deuxième portion d'obturation laquelle comprenant une deuxième zone d'appui (8).

5. Dispositif de protection selon la revendication 4, **caractérisé en ce que** la première zone d'appui (7) et la deuxième zone d'appui (8) sont aptes et destinées à délimiter une zone d'insertion (13) dans la première position (P01), de forme complémentaire audit connecteur électrique (9) de ladite fiche (10) et de préférence de forme oblongue.

6. Dispositif de protection selon l'une quelconque des revendications 4 à 5, la première zone d'appui (7) du premier obturateur (3) comprend un premier plan incliné (C1) et la deuxième zone d'appui (8) du deuxième obturateur (4) comprend un deuxième plan incliné (C2).

7. Dispositif de protection selon l'une quelconque des revendications 4 à 6, **caractérisé en ce que** la première extrémité (11) du premier obturateur (3) comprend le premier organe de rappel (5) de sorte à former une première pièce monobloc et **en ce que** la première extrémité (11') du deuxième obturateur (4) comprend le deuxième organe de rappel (6) de sorte à former une deuxième pièce monobloc.

8. Ensemble comprenant au moins un enjoliveur (18) pour appareil électrique comprenant au moins un connecteur électrique (1) et un dispositif de protection dudit au moins un connecteur électrique (1), ledit enjoliveur (18) comprenant au moins une paroi (19) munie d'au moins un orifice traversant (20), de préférence de forme oblongue, ledit orifice traversant (20) étant apte et destiné à être disposé en regard dudit connecteur électrique (1) et configuré pour former un accès à au moins un connecteur électrique (9) complémentaire d'une fiche (10), ledit ensemble est **caractérisé en ce que** ledit dispositif de protection est selon l'une quelconque des revendications 1 à 7.

9. Ensemble selon la revendication 8, **caractérisé en ce que** la paroi (19) de l'enjoliveur (18) est disposée dans un deuxième plan (P2) parallèle audit premier plan (P1) et **en ce que** la paroi (19) comprend une face interne (21) et une face externe (22), et **en ce que** ledit au moins un obturateur (3, 4) est monté coulissant par rapport à ladite face interne (21) dudit enjoliveur (18).

10. Ensemble selon l'une quelconque des revendications 8 à 9, **caractérisé en ce que** le dispositif de protection est selon l'une quelconque des revendications 4 à 7 et **en ce que** ledit orifice traversant (20) débouche sur la première portion d'obturation du premier obturateur (3) et la deuxième portion d'obturation du deuxième obturateur (4) dans la première position (P01).

11. Ensemble selon l'une quelconque des revendications 8 à 10, **caractérisé en ce que** le dispositif de protection est selon l'une quelconque des revendications 4 à 7 et **en ce que** la première portion d'obturation du premier obturateur (3) et la deuxième portion d'obturation du deuxième obturateur (4) s'insère au moins en partie dans ledit orifice traversant (20) de l'enjoliveur (18) dans la première position (P01).

12. Ensemble selon l'une quelconque des revendications 10 ou 11, **caractérisé en ce que** le dispositif de protection est selon la revendication 5 et **en ce que** dans la première position (P01), l'orifice traversant (20) débouche sur la zone d'insertion (13) ou contient la zone d'insertion (13).

13. Ensemble selon l'une quelconque des revendications 8 à 12, **caractérisé en ce que** ladite face interne (21) de l'enjoliveur (18) comprend en outre au moins deux rails de guidage (23) coopérant avec ledit au moins un obturateur (3, 4) et agencés pour guider ledit au moins obturateur (3, 4) selon le premier mouvement de translation.

14. Ensemble selon l'une quelconque des revendications 8 à 12, **caractérisé en ce que** l'orifice traversant (20) comprend au moins une face de guidage (CG) coopérant avec ledit au moins un obturateur (3, 4) et ladite face de guidage (CG) étant agencée pour guider ledit au moins un obturateur (3, 4) selon le premier mouvement de translation composé avec le deuxième mouvement de translation.

15. Ensemble selon l'une quelconque des revendications 7 à 14, **caractérisé en ce que** l'enjoliveur (18) comprend en outre une paroi périphérique (24) saillante et perpendiculaire par rapport à la face interne (21) sur laquelle est monté ledit au moins un organe de rappel (5, 6).

16. Appareil électrique, de préférence une prise (2), comprenant au moins un connecteur électrique (1), de préférence un connecteur électrique (1) USB, et un dispositif de protection dudit au moins un connecteur électrique (1), **caractérisé en ce que** ledit dispositif de protection est selon l'une quelconque des revendications 1 à 7.

17. Appareil électrique selon la revendication 16, **caractérisé en ce que** l'appareil électrique comprend un enjoliveur (18) formant avec ledit dispositif de protection un ensemble selon l'une quelconque des revendications 8 à 15.

18. Appareil électrique selon l'une quelconque des revendications 16 à 17, **caractérisé en ce que** ledit appareil électrique comprend en outre au moins un interrupteur (25) comprenant au moins un levier d'actionnement (26) et **en ce que** ledit levier d'actionnement (26) est disposé relativement audit au moins un obturateur (3, 4) de sorte que dans la première position (P01) dudit au moins un obturateur (3, 4), le levier d'actionnement (26) est dans une position non actionnée (POFF) et dans la deuxième position (P02) dudit obturateur (3, 4) le levier d'actionnement (26) est dans une position actionnée (PON) ou inversement.

19. Appareil électrique selon la revendication 18, **caractérisé en ce que** ledit appareil électrique comprend un module électronique d'alimentation (28) dudit connecteur électrique (1) relié électriquement au dit connecteur électrique (1) et **en ce que** ledit interrupteur (25) est relié électriquement audit module électronique d'alimentation (28) pour interrompre ou autoriser le passage du courant dans le module électronique d'alimentation (28).

20. Appareil électrique selon l'une quelconque des revendications 18 à 19, **caractérisé en ce que** ledit appareil électrique comprend un module électronique d'alimentation (28) dudit connecteur électrique (1) relié électriquement au dit connecteur électrique (1) et **en ce que** ledit interrupteur (25) est relié électriquement audit module électronique d'alimentation (28) pour interrompre ou autoriser le passage du courant dans le module électronique d'alimentation (28).

21. Appareil électrique selon la revendication 20, **caractérisé en ce que** le module fonctionnel additionnel comprend au moins un indicateur, de préférence lumineux.

22. Appareil électrique selon les revendications 17 et 21, **caractérisé en ce que** ledit enjoliveur (18) comprend au moins un premier orifice (27) ou une zone avec un amincissement de matière, **en ce que** ledit obturateur (3, 4) comprend au moins un deuxième orifice ou est dans une matière translucide, le premier orifice (27) ou la zone avec un amincissement de matière, le deuxième orifice et ledit indicateur étant alignés dans la première position (P01) ou dans la deuxième position (P02).

23. Appareil électrique selon l'une quelconque des revendications 17 à 22, **caractérisé en ce que** ledit appareil électrique est une prise (2) agencée pour être encastrée ou rapportée en saillie dans une paroi ou une prise intégrée à une goulotte ou à du mobilier de bureau.

24. Appareil électrique selon l'une quelconque des revendications 17 à 23, **caractérisé en ce que** ledit connecteur électrique (1) est de type USB de préférence de type C.

## Patentansprüche

1. Schutzvorrichtung für mindestens einen elektrischen Verbindungsstecker (1) eines elektrischen Geräts, vorzugsweise einer Steckdose (2), vorzugsweise einen elektrischen USB-Verbindungsstecker (1), beinhaltend:
- mindestens ein Verschlusselement (3, 4), das dazu eingerichtet ist, relativ zu dem mindestens einen elektrischen Verbindungsstecker (1), der entlang einer zweiten Richtung (D2) angeordnet ist, zwischen mindestens einer ersten sogenannten Verschlussstellung (P01), in der das mindestens eine Verschlusselement (3, 4) dazu eingerichtet ist, den mindestens einen elektrischen Verbindungsstecker (1) abzudecken, und einer zweiten sogenannten Einführungsstellung (P02), in der das mindestens eine Verschlusselement (3, 4) dazu eingerichtet ist, den Zugang zu dem mindestens einen elektrischen Verbindungsstecker (1) freizugeben, beweglich zu sein,
- mindestens ein Rückstellorgan (5, 6), das mit dem Verschlusselement (3, 4) mechanisch verbunden ist, wobei das mindestens eine Rückstellorgan (5, 6) dazu konfiguriert ist, die automatische Rückkehr des Verschlusselements (3, 4) von der zweiten Stellung (P02) in die erste Stellung (P01) zu gestatten,
- wobei das mindestens eine Verschlusselement (3, 4) dazu eingerichtet ist, relativ zu dem elektrischen Verbindungsstecker (1) mindestens gemäß einer ersten geradlinigen Translationsbewegung entlang einer ersten Richtung (D1) und in einer ersten Ebene (P1) zwischen der ersten Stellung (P01) und der zweiten Stellung (P02) beweglich zu sein,
wobei die Schutzvorrichtung **dadurch gekennzeichnet ist, dass**:
- das mindestens eine Verschlusselement (3, 4) mindestens einen Anlagebereich (7, 8) beinhaltet, der dazu fähig und bestimmt ist, einen elektrischen Verbindungsstecker (9) mindestens eines Steckers (10) aufzunehmen, und dazu eingerichtet ist, eine Anlagekraft (F) entlang der zweiten sogenannten Einführungsrichtung (D2), die im Wesentlichen senkrecht zu der ersten Richtung (D1) ist, zu übertragen, um den Übergang von der ersten Stellung (P01) in die zweite Stellung (P02) mindestens gemäß der ersten geradlinigen Translationsbewegung zu bewirken.

2. Schutzvorrichtung nach Anspruch 1, **dadurch gekennzeichnet, dass** das mindestens eine Verschlusselement (3, 4) dazu eingerichtet ist, relativ zu dem elektrischen Verbindungsstecker (1) gemäß der ersten geradlinigen Translationsbewegung entlang der ersten Richtung (D1) und in der ersten Ebene (P1), überlagert von einer zweiten geradlinigen Translationsbewegung entlang der zweiten Richtung (D2), zwischen der ersten Stellung (P01) und der zweiten Stellung (P02) beweglich zu sein, und dass der Anlagebereich (7, 8) dazu eingerichtet ist, die Anlagekraft (F) entlang der zweiten sogenannten Einführungsrichtung (D2) zu übertragen, um den Übergang von der ersten Stellung (P01) in die zweite Stellung (P02) mindestens gemäß der ersten geradlinigen Translationsbewegung, überlagert von der zweiten geradlinigen Translationsbewegung, zu bewirken.

3. Schutzvorrichtung nach einem der Ansprüche 1 bis 2, **dadurch gekennzeichnet, dass** sie mindestens ein erstes Verschlusselement (3) und ein zweites Verschlusselement (4) beinhaltet und dass das erste Verschlusselement (3) und das zweite Verschlusselement (4) dazu eingerichtet sind, in ihrer jeweiligen ersten Stellung (P01) den elektrischen Verbindungsstecker (1) vollständig abzudecken, und dass das erste Verschlusselement (3) und das zweite Verschlusselement (4) dazu eingerichtet sind, in ihrer jeweiligen zweiten Stellung (P02) den elektrischen Verbindungsstecker (1) vollständig freizulegen.

4. Schutzvorrichtung nach Anspruch 3, **dadurch gekennzeichnet, dass** das erste Verschlusselement (3) ein erstes Ende (11), das mit einem ersten Rückstellorgan (5) verbunden ist, und ein zweites Ende (12), das einen ersten Verschlussabschnitt beinhaltet, der einen ersten Anlagebereich (7) beinhaltet, beinhaltet und dass das zweite Verschlusselement (4) ein erstes Ende (11'), das mit einem zweiten Rückstellorgan (6) verbunden ist, und ein zweites Ende (12'), das einen zweiten Verschlussabschnitt beinhaltet, der einen zweiten Anlagebereich (8) beinhaltet, beinhaltet.

5. Schutzvorrichtung nach Anspruch 4, **dadurch gekennzeichnet, dass** der erste Anlagebereich (7) und der zweite Anlagebereich (8) dazu fähig und bestimmt sind, in der ersten Stellung (P01) einen Einführungsbereich (13) mit einer zu dem elektrischen Verbindungsstecker (9) des Steckers (10) komplementären Form und vorzugsweise mit länglicher Form zu begrenzen.

6. Schutzvorrichtung nach einem der Ansprüche 4 bis 5, wobei der erste Anlagebereich (7) des ersten Verschlusselements (3) eine erste schräge Ebene (C1) beinhaltet und der zweite Anlagebereich (8) des zweiten Verschlusselements (4) eine zweite schräge Ebene (C2) beinhaltet.

7. Schutzvorrichtung nach einem der Ansprüche 4 bis 6, **dadurch gekennzeichnet, dass** das erste Ende (11) des ersten Verschlusselements (3) das erste Rückstellorgan (5) beinhaltet, um ein erstes einstückiges Teil zu bilden, und dass das erste Ende (11') des zweiten Verschlusselements (4) das zweite Rückstellorgan (6) beinhaltet, um ein zweites einstückiges Teil zu bilden.

8. Baugruppe, die mindestens eine Zierabdeckung (18) für ein elektrisches Gerät, das mindestens einen elektrischen Verbindungsstecker (1) beinhaltet, und eine Schutzvorrichtung für den mindestens einen elektrischen Verbindungsstecker (1) beinhaltet, wobei die Zierabdeckung (18) mindestens eine Wand (19) beinhaltet, die über mindestens eine Durchtrittsöffnung (20), vorzugsweise mit länglicher Form, verfügt, wobei die Durchtrittsöffnung (20) dazu fähig und bestimmt ist, gegenüber dem elektrischen Verbindungsstecker (1) angeordnet zu sein, und dazu konfiguriert ist, einen Zugang zu mindestens einem zu einem Stecker (10) komplementären elektrischen Verbindungsstecker (9) zu bilden, wobei die Baugruppe **dadurch gekennzeichnet ist, dass** die Schutzvorrichtung einem der Ansprüche 1 bis 7 entspricht.

9. Baugruppe nach Anspruch 8, **dadurch gekennzeichnet, dass** die Wand (19) der Zierabdeckung (18) in einer zweiten Ebene (P2) parallel zu der ersten Ebene (P1) angeordnet ist und dass die Wand (19) eine Innenseite (21) und eine Außenseite (22) beinhaltet und dass das mindestens eine Verschlusselement (3, 4) in Bezug auf die Innenseite (21) der Zierabdeckung (18) verschiebbar montiert ist.

10. Baugruppe nach einem der Ansprüche 8 bis 9, **dadurch gekennzeichnet, dass** die Schutzvorrichtung einem der Ansprüche 4 bis 7 entspricht und dass die Durchtrittsöffnung (20) an dem ersten Verschlussabschnitt des ersten Verschlusselements (3) und dem zweiten Verschlussabschnitt des zweiten Verschlusselements (4) in der ersten Stellung (P01) mündet.

11. Baugruppe nach einem der Ansprüche 8 bis 10, **dadurch gekennzeichnet, dass** die Schutzvorrichtung einem der Ansprüche 4 bis 7 entspricht und dass sich der erste Verschlussabschnitt des ersten Verschlusselements (3) und der zweite Verschlussabschnitt des zweiten Verschlusselements (4) in der ersten Stellung (P01) mindestens teilweise in die Durchtrittsöffnung (20) der Zierabdeckung (18) einfügen.

12. Baugruppe nach einem der Ansprüche 10 oder 11, **dadurch gekennzeichnet, dass** die Schutzvorrichtung Anspruch 5 entspricht und dass die Durchtrittsöffnung (20) in der ersten Stellung (P01) an dem Einführungsbereich (13) mündet oder den Einführungsbereich (13) enthält.

13. Baugruppe nach einem der Ansprüche 8 bis 12, **dadurch gekennzeichnet, dass** die Innenseite (21) der Zierabdeckung (18) ferner mindestens zwei Führungsschienen (23) beinhaltet, die mit dem mindestens einen Verschlusselement (3, 4) zusammenwirken und dazu eingerichtet sind, das mindestens eine Verschlusselement (3, 4) gemäß der ersten Translationsbewegung zu führen.

14. Baugruppe nach einem der Ansprüche 8 bis 12, **dadurch gekennzeichnet, dass** die Durchtrittsöffnung (20) mindestens eine Führungsfläche (CG) beinhaltet, die mit dem mindestens einen Verschlusselement (3, 4) zusammenwirkt, und wobei die Führungsfläche (CG) dazu eingerichtet ist, das mindestens eine Verschlusselement (3, 4) gemäß der ersten Translationsbewegung, überlagert von der zweiten Translationsbewegung, zu führen.

15. Baugruppe nach einem der Ansprüche 7 bis 14, **dadurch gekennzeichnet, dass** die Zierabdeckung (18) ferner eine vorstehende Umfangswand (24), die zu der Innenseite (21) senkrecht ist, beinhaltet, an der das mindestens eine Rückstellorgan (5, 6) montiert ist.

16. Elektrisches Gerät, vorzugsweise eine Steckdose (2), beinhaltend mindestens einen elektrischen Verbindungsstecker (1), vorzugweise einen elektrischen USB-Verbindungsstecker (1), und eine Schutzvorrichtung für den mindestens einen elektrischen Verbindungsstecker (1), **dadurch gekennzeichnet, dass** die Schutzvorrichtung einem der Ansprüche 1 bis 7 entspricht.

17. Elektrisches Gerät nach Anspruch 16, **dadurch gekennzeichnet, dass** das elektrische Gerät eine Zierabdeckung (18) beinhaltet, die mit der Schutzvorrichtung eine Baugruppe nach einem der Ansprüche 8 bis 15 bildet.

18. Elektrisches Gerät nach einem der Ansprüche 16 bis 17, **dadurch gekennzeichnet, dass** das elektrische Gerät ferner mindestens einen Schalter (25) beinhaltet, der mindestens einen Betätigungshebel (26) beinhaltet, und dass der Betätigungshebel (26) relativ zu dem mindestens einen Verschlusselement (3, 4) so angeordnet ist, dass sich der Betätigungshebel (26) in der ersten Stellung (P01) des mindestens einen Verschlusselements (3, 4) in einer nicht betätigten Stellung (POFF) befindet und sich der Betätigungshebel (26) in der zweiten Stellung (P02) des Verschlusselements (3, 4) in einer betätigten Stellung (PON) befindet oder umgekehrt.

19. Elektrisches Gerät nach Anspruch 18, **dadurch gekennzeichnet, dass** das elektrische Gerät ein elektronisches Versorgungsmodul (28) für den elektrischen Verbindungsstecker (1) beinhaltet, das mit dem elektrischen Verbindungsstecker (1) elektrisch verbunden ist, und dass der Schalter (25) mit dem elektronischen Versorgungsmodul (28) elektrisch verbunden ist, um den Durchgang des Stroms in dem elektronischen Versorgungsmodul (28) zu unterbrechen oder zu gestatten.

20. Elektrisches Gerät nach einem der Ansprüche 18 bis 19, **dadurch gekennzeichnet, dass** das elektrische Gerät ein elektronisches Versorgungsmodul (28) für den elektrischen Verbindungsstecker (1) beinhaltet, das mit dem elektrischen Verbindungsstecker (1) elektrisch verbunden ist, und dass der Schalter (25) mit dem elektronischen Versorgungsmodul (28) elektrisch verbunden ist, um den Durchgang des Stroms in dem elektronischen Versorgungsmodul (28) zu unterbrechen oder zu gestatten.

21. Elektrisches Gerät nach Anspruch 20, **dadurch gekennzeichnet, dass** das zusätzliche Funktionsmodul mindestens eine Anzeige, vorzugsweise eine Leuchtanzeige, beinhaltet.

22. Elektrisches Gerät nach den Ansprüchen 17 und 21, **dadurch gekennzeichnet, dass** die Zierabdeckung (18) mindestens eine erste Öffnung (27) oder einen Bereich mit einer Materialausdünnung beinhaltet, dass das Verschlusselement (3, 4) mindestens eine zweite Öffnung beinhaltet oder aus einem durchsichtigen Material besteht, wobei die erste Öffnung (27) oder der Bereich mit einer Materialausdünnung, die zweite Öffnung und die Anzeige in der ersten Stellung (P01) oder in der zweiten Stellung (P02) nacheinander ausgerichtet sind.

23. Elektrisches Gerät nach einem der Ansprüche 17 bis 22, **dadurch gekennzeichnet, dass** das elektrische Gerät eine Steckdose (2), die dazu eingerichtet ist, in eine Wand eingepasst oder von dieser vorstehend angebracht zu werden, oder eine Steckdose, die in einen Kabelkanal oder eine Büroeinrichtung integriert ist, ist.

24. Elektrisches Gerät nach einem der Ansprüche 17 bis 23, **dadurch gekennzeichnet, dass** der elektrische Verbindungsstecker (1) vom Typ USB, vorzugsweise vom Typ C, ist.

## Claims

1. A device for protecting at least one electrical connector (1) of an electrical appliance, preferably a socket outlet (2), preferably a USB electrical connector (1), including:
- at least one shutter (3, 4) adapted to be mobile relative to said at least one electrical connector (1) disposed in a second direction (D2) between at least one first position (P01) termed a blocking position in which said at least one shutter (3, 4) is adapted to cover said at least one electrical connector (1) and a second position (P02) termed an insertion position in which said at least one shutter (3, 4) is adapted to free access to said at least one electrical connector (1),
- at least one return member (5, 6) mechanically connected to said shutter (3, 4), said at least one return member (5, 6) being configured to allow automatic return of said shutter (3, 4) from the second position (P02) to the first position (P01),
- said at least one shutter (3, 4) being adapted to be mobile relative to said electrical connector (1) at least in a first movement in rectilinear translation in a first direction (D1) and in a first plane (P1) between the first position (P01) and the second position (P02),
which protective device is **characterized in that**:
- said at least one shutter (3, 4) includes at least one bearing zone (7, 8) adapted and intended to receive an electrical connector (9) of at least one plug (10) and being adapted to transmit a bearing force (F) in the second direction (D2) termed the insertion direction substantially perpendicular to the first direction (D1) so as to drive the movement from the first position (P01) to the second position (P02) at least in the first movement in rectilinear translation.

2. The protective device as claimed in claim 1 **characterized in that** said at least one shutter (3, 4) is adapted to be mobile relative to said electrical connector (1) in the first movement in rectilinear translation in the first direction (D1) and in the first plane (P1) combined with a second movement in rectilinear translation in the second direction (D2) between the first position (P01) and the second position (P02) and **in that** the bearing zone (7, 8) is adapted to transmit the bearing force (F) in the second direction (D2) termed the insertion direction to drive the movement from the first position (P01) to the second position (P02) at least in the first movement in rectilinear translation combined with the second movement in rectilinear translation.

3. The protective device as claimed in either one of claims 1 or 2 **characterized in that** it includes at least one first shutter (3) and one second shutter (4) and **in that** the first shutter (3) and the second shutter (4) are adapted, in their respective first position (P01) to cover the electrical connector (1) completely and **in that** the first shutter (3) and the second shutter (4) are adapted in their respective second position (P02) to uncover the electrical connector (1) completely.

4. The protective device as claimed in claim 3 **characterized in that** the first shutter (3) has a first end (11) connected to a first return member (5) and a second end (12) including a first blocking portion including a first bearing zone (7) and **in that** the second shutter (4) has a first end (11') connected to a second return member (6) and a second end (12') including a second blocking portion including a second bearing zone (8).

5. The protective device as claimed in claim 4 **characterized in that** in the first position (P01) the first bearing zone (7) and the second bearing zone (8) are adapted and intended to delimit an insertion zone (13) of complementary shape to said electrical connector (9) of said plug (10) and preferably of oblong shape.

6. The protective device as claimed in either one of claims 4 or 5, the first bearing zone (7) of the first shutter (3) including a first inclined plane (C1) and the second bearing zone (8) of the second shutter (4) including a second inclined plane (C2).

7. The protective device as claimed in any one of claims 4 to 6 **characterized in that** the first end (11) of the first shutter (3) includes the first return member (5) so as to form a first one-piece part and **in that** the first end (11') of the second shutter (4) includes the second return member (6) so as to form a second one-piece part.

8. An assembly comprising at least one embellisher (18) for an electrical appliance comprising at least one electrical connector (1) and a device for protecting said at least one electrical connector (1), said embellisher (18) including at least one wall (19) provided with at least one through-orifice (20), preferably of oblong shape, said through-orifice (20) being adapted and intended to be disposed facing said electrical connector (1) and configured to provide access to at least one complementary electrical connector (9) of a plug (10), which assembly is **characterized in that** said protective device is as claimed in any one of claims 1 to 7.

9. The assembly as claimed in claim 8 **characterized in that** the wall (19) of the embellisher (18) is disposed in a second plane (P2) parallel to said first plane (P1) and **in that** the wall (19) has an internal face (21) and an external face (22) and **in that** said at least one shutter (3, 4) is adapted to slide relative to said internal face (21) of said embellisher (18).

10. The assembly as claimed in either one of claims 8 or 9 **characterized in that** the protective device is as claimed in any one of claims 4 to 7 and **in that** in the first position (P01) said through-orifice (20) opens onto the first blocking portion of the first shutter (3) and the second blocking portion of the second shutter (4).

11. The assembly as claimed in any one of claims 8 to 10 **characterized in that** the protective device is as claimed in any one of claims 4 to 7 and **in that** in the first position (P01) the first blocking portion of the first shutter (3) and the second blocking portion of the second shutter (4) are inserted at least in part in said through-orifice (20) of the embellisher (18).

12. The assembly as claimed in either one of claims 10 or 11 **characterized in that** the protective device is as claimed in claim 5 and **in that** in the first position (P01) the through-orifice (20) opens onto to the insertion zone (13) or contains the insertion zone (13).

13. The assembly as claimed in any one of claims 8 to 12 **characterized in that** said internal face (21) of the embellisher (18) further includes at least two guide rails (23) cooperating with said at least one shutter (3, 4) and adapted to guide said at least one shutter (3, 4) in the first movement in translation.

14. The assembly as claimed in any one of claims 8 to 12 **characterized in that** the through-orifice (20) has at least one guide face (CG) cooperating with said at least one shutter (3, 4), said guide face (CG) being adapted to guide said at least one shutter (3, 4) in the first movement in translation combined with the second movement in translation.

15. The assembly as claimed in any one of claims 7 to 14 **characterized in that** the embellisher (18) further includes a peripheral wall (24) projecting from and perpendicular to the internal face (21) on which said at least one return member (5, 6) is mounted.

16. An electrical appliance, preferably a socket outlet (2), including at least one electrical connector (1), preferably a USB electrical connector (1), and a device for protecting said at least one electrical connector (1), **characterized in that** said protective device is as claimed in any one of claims 1 to 7.

17. The electrical appliance as claimed in claim 16 **characterized in that** the electrical appliance includes an embellisher (18) forming with said protective device an assembly as claimed in any one of claims 8 to 15.

18. The electrical appliance as claimed in either one of claims 16 or 17 **characterized in that** said electrical appliance further includes at least one switch (25) including at least one actuator lever (26) and **in that** said actuator lever (26) is disposed relative to said at least one shutter (3, 4) so that in the first position (P01) of said at least one shutter (3, 4) the actuator lever (26) is in a non-actuated position (POFF) and in the second position (P02) of said shutter (3, 4) the actuator lever (26) is in an actuated position (PON) or vice versa.

19. The electrical appliance as claimed in claim 18 **characterized in that** said electrical appliance includes a power supply electronic module (28) of said electrical connector (1) electrically connected to said electrical connector (1) and **in that** said switch (25) is electrically connected to the power supply electronic module (28) to interrupt or to allow the passage of current in the power supply electronic module (28).

20. The electrical appliance as claimed in either one of claims 18 or 19 **characterized in that** said electrical appliance includes a power supply electronic module (28) of said electrical connector (1) electrically connected to said electrical connector (1) and **in that** said switch (25) is electrically connected to said power supply electronic module (28) to interrupt or to allow the passage of current in the power supply electronic module (28).

21. The electrical appliance as claimed in claim 20 **characterized in that** the additional functional module includes at least one indicator, preferably an indicator lamp.

22. The electrical appliance as claimed in claims 17 and 21 **characterized in that** said embellisher (18) includes at least one first orifice (27) or a zone with thinning of material and **in that** said shutter (3, 4) includes at least one second orifice or is made of a translucent material, the first orifice (27) or the zone with thinning of material, the second orifice and said indicator being aligned in the first position (P01) or in the second position (P02).

23. The electrical appliance as claimed in any one of claims 17 to 22 **characterized in that** said electrical appliance is a socket outlet (2) adapted to be mounted on or flush with a wall or a socket outlet integrated into trunking or office furniture.

24. The electrical appliance as claimed in any one of claims 17 to 23 **characterized in that** said electrical connector (1) is of USB type, preferably of type C.
